Europäisches Patentamt

European Patent Office

Office européen des brevets

(19)

(11) Publication number: **0 291 285**
**A1**

# (12) EUROPEAN PATENT APPLICATION

(21) Application number: 88304247.5

(22) Date of filing: 11.05.88

(51) Int. Cl.4: **B 60 T 11/30**

(30) Priority: 11.05.87 GB 8711112

(43) Date of publication of application:
17.11.88 Bulletin 88/46

(84) Designated Contracting States: DE ES FR GB IT

(71) Applicant: LUCAS INDUSTRIES public limited company
Great King Street
Birmingham, B19 2XF West Midlands (GB)

(72) Inventor: Price, Anthony George
14 Meadow Lane Croesyceiliog
Cwmbran Wales (GB)

Genge, Michael Anthony John
Restharrow Ballfield Road
Godalming Surrey (GB)

Prosser, Lyndon 17, Bryn Owain
Highfields Energlyn Caerphilly
Glamorgan Wales (GB)

Campbell, Roy The Corner House
1, Marlbrook Lane Lickey Rock
Bromsgrove Worcestershire (GB)

(74) Representative: Waite, Anthony William et al
MARKS & CLERK Alpha Tower Suffolk Street Queensway
Birmingham B1 1TT (GB)

(54) Brake actuator.

(57) A fluid pressure-operated brake actuator has a cylinder (2) with a fluid inlet means (5) for the supply of fluid under pressure to the cylinder via a pipe (6) releasably secured by a pipe clamp (7). A seat (14A) is provided in the body in a flow path between the inlet means and the interior of the cylinder and a bleed port (15) is disposed to communicate with the flow path at the side of said seat remote from the cylinder interior. A valve element (9) is normally forced by the clamp member (7) into sealing engagement with the seat (14A) to seal off the bleed port during normal operation, release of the clamp member permitting movement of the element (9) away from the seat to place the cylinder interior in communication with the bleed port.

FIG 1

Bundesdruckerei Berlin

# Description

## BRAKE ACTUATOR.

This invention relates to a fluid pressure-operated brake actuator having fluid inlet means for the supply of fluid under pressure to a pressure chamber of the actuator, and a bleed port to permit trapped air to be bled from the actuator.

In many conventional actuators, the bleed port is provided additionally to the inlet port and is sealed by a hollow bleed screw having a seat for sealing engagement with a corresponding seat in the actuator body, the bleed screw being released when bleeding is required to permit the escape of fluid and entrapped air through the bleed port. Although such actuators work well in practice, the provision of the bleed port requires the use of a relatively bulky actuator body on which considerable machining is necessary for accommodation of the bleed screw, which is itself a relatively expensive item.

It has been proposed in US Patent No.4318460 to use a single port for both fluid supply and bleeding purposes by providing supply and bleed ports in an additional body attached to the actuator body. This arrangement, whilst requiring only a single port in the actuator housing retains a conventional bleed screw and also employs an additional internal sleeve having an intricate pattern of bleed and supply passages formed therein. It does not, therefore, lead to significant cost reduction as compared with the aforesaid earlier arrangement.

An object of the present invention is to provide a brake actuator in which fluid supply and bleed facilities are provided in a particularly simple and convenient manner without the use of a separate bleed screw.

A fluid pressure-operated brake actuator comprises a cylinder, fluid inlet means for the supply of fluid under pressure to a chamber within the cylinder, a fluid supply pipe connected to the inlet means and releasably secured by a pipe clamp member, characterised by the provision of a seat in the body located in a flow path between the inlet means and said chamber, and a bleed port communicating with said flow path at the side of said seat remote from said chamber, the clamp member, in use, retaining an end portion of the pipe in sealed relationship with the inlet means and simultaneously causing engagement of a sealing surface with the seat in order to prevent communication between the chamber and bleed port, release of the clamp member placing the bleed port and chamber in communication to permit bleeding of entrapped air from the cylinder.

In one convenient arrangement, the sealing surface is on a valve element which is forced by the pipe clamp member into sealing engagement with said seat in order to seal off the bleed port during normal operation. Conveniently, slackening of the clamp member permits movement of said element away from said seat to place the pressure chamber in communication with the bleed port. The element may be spring urged in a direction away from the seat.

Alternatively, said sealing surface is on an end portion of the pipe, said end portion conveniently being enlarged with the sealing surface formed on the free end thereof and the clamp member engaging an oppositely facing surface of said end portion to provide said sealing relationship.

The invention will now be described, by way of example, with reference to the accompanying drawings in which:-

Figure 1 is a cross-sectional view of part of one form of brake actuator of the invention;

Figure 2 is a cross-sectional view at right angles to that of Figure 1 illustrating an alternative embodiment of the actuator of the invention, and

Figures 3 to 6 are cross-sectional views similar to Figure 1 illustrating parts of further alternative forms of the actuator of the invention.

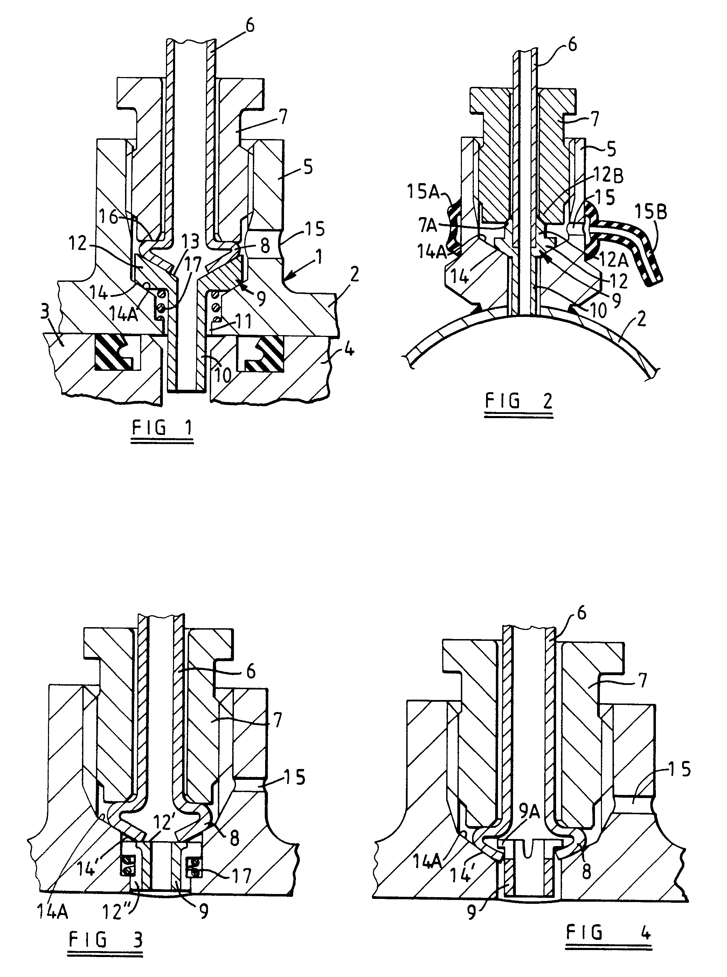

Figure 1 of the drawings illustrates part of an hydraulic brake actuator, such as a slave cylinder or disc brake actuator, the body of which is indicated generally at 1 and which forms a pressure cylinder 2 containing a pair of opposed pistons 3, 4. The cylinder is provided with fluid inlet means in the form of an inlet port connector 5 within which a fluid inlet pipe 6 is retained by a pipe nut 7 screwed into an internally threaded bore of the port connector 5, in conventional manner. A flared end portion 8 of the pipe 6 is trapped between the inner end of the pipe nut 7 and an insert 9 located within the port connector 5. The insert 9 has a tubular stem 10 projecting through a fluid inlet port 11 of the cylinder and a relatively large head 12 which provides an internal conical seat 13 engaged by the flared end portion 8 of the pipe 6 and an external conical seat 14 which engages a corresponding seat 14A formed in the body 1 around the port 11. A bleed port 15 is formed through the wall of the port connector 5 at a location between the pipe nut 7 and seat 14A.

The pipe nut 7 engages the upper surface 16 of the flared pipe end portion 8 and, when tightened, presses this flared portion against the head 12 of the insert 9 to urge the latter inwardly, against the action of a spring 17, into the position shown in which the seat 14 engages against the opposed body seat and the free end surface of the flared portion engages the seat 13.

With the components in their positions illustrated, a fluid inlet passage exists along the pipe 6 and through the insert 9 into the cylinder 2, enabling brake actuation to be effected in the normal manner by actuation of the pistons 3, 4. The insert 14 acts as a valve, isolating the bleed port 15 from the interior of the cylinder 2 by engagement of its seats 13 and 14 respectively against the pipe end 8 and the body seat 14A.

During initial installation of the actuator on a vehicle, or at other times when fluid leakage has occurred for some reason, it can be necessary to remove entrapped air from within the cylinder by bleeding a certain amount of fluid therefrom.

In order to perform a bleeding operation, the pipe nut 7 is slackened, enabling the spring 17 to raise the insert 9 away from the body seat 14A, whilst at the same time maintaining a seal between the seat 13 and the free end surface of the flared pipe portion 8. Pumping of fluid into the cylinder along the pipe 6 and insert 9 now has the effect of causing expulsion of fluid along a relatively low pressure path around the outside of the stem 10, past the seat 14 and through the bleed port 15. The stem 10 projects some way into the interior of the cylinder to minimise mixing of incoming fluid with fluid moving towards the bleed port. When the bleeding operation has been completed, the bleed port 15 is once again sealed off by screwing down the pipe nut 7 in order to return the insert 9 to the position shown in which the seat 14 once again engages against the body seat 14A. The bleed port 15 may conveniently be covered by a suitable protective boot (not shown) which may embody a tube enabling the bled fluid to be directed to a suitable location.

In the embodiment illustrated in Figure 2, the port connector 5 is welded to the exterior surface of the cylinder 2 which, in this case, is in the form of a thin-walled drawn steel tube. An insert 9 is again provided and has a head 12 with a seat 14 which engages against a corresponding seat 14A within the port connector 5. In this embodiment, the insert 9 has an upwardly extending hollow portion 12A which receives the plain non-flared end of an inlet pipe 6. The portion 12A is provided with an upper peripheral part-conical seat 12B. A tubular extension 10 extends to a location adjacent the interior of the cylinder 2 or, in some cases, within the cylinder.

The pipe nut 7 has a conical recess 7A which engages over the conical surface 12B of the insert 9. The surfaces 7A and 12B coact, when the pipe screw 7 is tightened, to compress the cylindrical portion 12A of the insert 9 radially inwardly against the inserted end portion of the pipe 6 so that the latter is clamped firmly in the insert. The clamping force exerted by the screw 7 also acts to engage the seat 14 of the insert firmly with the corresponding seat 14A of the housing so that the interior of the cylinder 2 is sealed from the bleed port 15. The latter is protected by a boot 15A surrounding the connector 5 and having a tube 15B for directing bled fluid to a desired location.

When it is desired to expel entrapped air from the interior of the cylinder 2, the pipe nut 7 is slackened, enabling the insert 9 to move away from the seat 14A and allow fluid and entrapped air to pass around the tubular extension 10 and past the head 12 for expulsion through the bleed port 15. The pressure of the bled fluid acting on the seat 14 acts to retain the surface 12B of the insert in engagement with the recess 7A of the pipe screw and thereby minimise leakage of fluid around the outside of the pipe 6. Once the bleeding operation has been completed, the pipe nut is again tightened to clamp the insert in its original position so as once more to interrupt communication between the cylinder 2 and bleed port 15.

The embodiment illustrated in Figure 3 is similar to that of Figure 1 in that a flared portion 8 of an inlet pipe 6 co-operates at one side thereof with the pipe screw 7 and at its other side with an insert 9 urged by a spring 17 in a direction towards the pipe nut. In this embodiment, the outer end surface 14' of the flared portion 8 seals against an internal bevelled seat 14A of the body 1 and the outer extremity of the flared portion seals also against the upper surface 12' of the insert 9. The insert 9 is circumferentially recessed to form a generally star-shaped configuration, the recesses 12" forming through passages between the cylinder and the upper side of the insert. As before, the pipe nut 7 acts against the upper surface of the flared portion 8 to urge the latter into sealing engagement with the seat 14A and surface 12' of the insert 9, sealing off the through passages of the insert from the bleed port.

With the pipe nut tightened, fluid under pressure may enter the cylinder through the pipe 6 and insert 9 for brake actuation. When a bleeding operation is required, the pipe nut 7 is slackened, enabling the spring 17 to lift the seat 14' of the flared portion away from the body seat 14A so as to permit fluid to bleed through the passages 12" of the insert 9 to be expelled through the bleed port 15. The insert surface 12' is, however, maintained in engagement with the free end of the flared portion 8 to maintain a continuous passage through the pipe 6 and insert into the cylinder, leakage around the pipe 6 through the pipe nut being prevented or at least minimised by the aforesaid engagement between the flared portion 8 and the pipe nut.

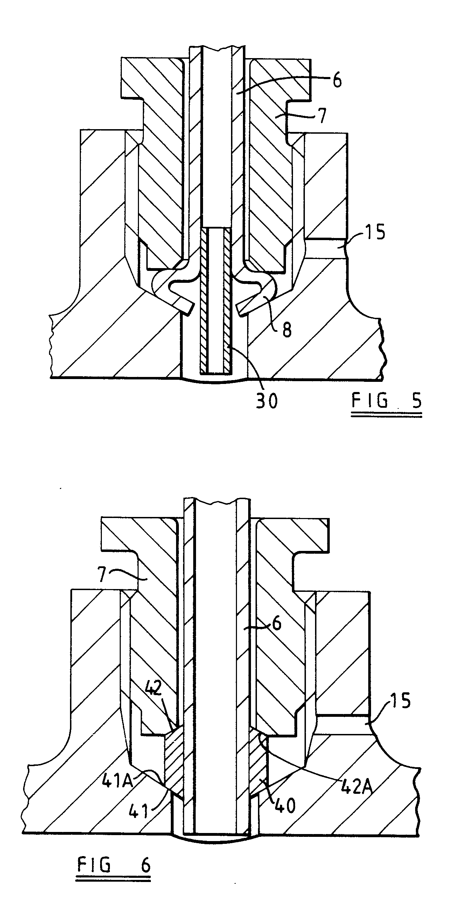

Figure 4 illustrates a further alternative arrangement using a flared end portion 8 of the inlet pipe 6. In this embodiment, an insert 9 is captive within the flared pipe end portion 8 by way of resilient projecting tabs or tongues 9A which are deformed to permit passage of the insert into the flared end portion 8 and subsequently snap-engage to the positions shown to prevent withdrawal of the insert. In this arrangement, sealing takes place between a seat 14' of the flared end portion 8 and an opposed surface 14A of the body and between the upper surface of the flared portion and pipe nut 7. Slackening of the pipe nut to effect a bleeding operation results in internal pressure from the cylinder acting on the free end of the insert 9 and moving the insert upwardly to engage the interior of the flared portion 8, the insert then effectively blocking the open end of the flared portion so as substantially to prevent leakage of bled fluid into the pipe 6. Fluid is bled between the disengaged surface 14' of the flared portion 8 and body seat 14A for expulsion through the bleed port 6, as before.

The embodiment of Figure 5 is similar to that of Figure 4, except that the insert is dispensed with and a tubular extension 30 is secured within the pipe 6, by press fitting or welding for example, and effectively prevents leakage of bled fluid back along the pipe 6 when the pipe nut 7 is slackened to permit bleeding. The pipe 30 may extend into the cylinder, as in Figures 1 and 2 for example, in order to inject actuating fluid into an optimum location where mixing of incoming and outgoing fluids is likely to be minimised.

The arrangement illustrated in Figure 6 employs an olive 40 secured to the pipe 6 at a location adjacent its inner end, as by press-fitting or welding for example. The olive has opposed conical surfaces 41, 42 which engage respectively against corresponding surfaces 41A, 42A on the cylinder 1 and pipe nut 7 when the pipe nut is tightened for normal operation. This condition is illustrated in the drawings and it will be seen that engagement of the surface 41 against the cylinder surface 41A isolates the cylinder from the bleed port 15, permitting normal brake actuation by application of fluid under pressure via the pipe 6 into the cylinder. When a bleeding operation is required, the pipe nut 7 is slackened, permitting the seat 41 of the olive to move out of engagement with the surface 41A and thereby permit fluid from the cylinder to flow through the bleed port 15. Pressure acting on the underside of the olive retains the upper seat 42 thereof in engagement with the surface 42A of the pipe nut to preclude or at least minimise leakage of fluid through the latter.

The invention will be seen to provide an extremely simple and cost-effective means for the provision of a bleed facility in a pressure cylinder which obviates the necessity for providing the conventional expensive bleed screw and minimises machining of the cylinder.

## Claims

1. A fluid pressure-operated brake actuator comprising a cylinder (2), fluid inlet means (5) for the supply of fluid under pressure to a chamber within the cylinder, a fluid supply pipe (6) connected to the inlet means and releasably secured by a pipe clamp member (7), characterised by the provision of a seat (14A, 41A) in the body located in a flow path between the inlet means and said chamber, and a bleed port (15) communicating with said flow path at the side of said seat remote from said chamber, the clamp member (7), in use, retaining an end portion (8, 40) of the pipe in sealed relationship with the inlet means and simultaneously causing engagement of a sealing surface (14, 41) with the seat (14A, 41A) in order to prevent communication between the chamber and bleed port (15), release of the clamp member placing the bleed port and chamber in communication to permit bleeding of entrapped air from the cylinder.

2. A brake actuator according to Claim 1 characterised in that said sealing surface (14) is on a valve element (9) which is forced by the pipe clamp member (7) into sealing engagement with said seat (14A) in order to seal off the bleed port during normal operation.

3. A brake actuator according to Claim 2 characterised in that release of said pipe clamp member (7) permits movement of said element (9) away from said seat (14A) to place the pressure chamber in communication with the bleed port.

4. A brake actuator according to any one of the preceding claims characterised in that said means (9) is spring-urged in a direction away from the seat.

5. A brake actuator according to Claim 2 or Claim 3 characterised in that said valve element (9) surrounds an end portion of the pipe (6) and a surface (7A) of the clamp member (7) engages an inclined surface (12B) of the element (9) to clamp the pipe end portion within the element (9) and to provide said sealing relationship between the pipe and the inlet means (5).

6. A brake actuator according to Claim 1 characterised in that said sealing surface (14') is on an end portion (8) of the pipe (6).

7. A brake actuator according to Claim 6 characterised in that said pipe end portion (8) is enlarged with said surface (14') formed on the free end thereof, the clamp member (7) engaging an oppositely facing surface of said end portion to provide said sealed relationship.

8. A brake actuator according to any one of Claims 1 to 4, 6 and 7, characterised in that said pipe end portion (8) is urged against the clamp member (7) in the released condition of the latter in order to maintain said sealed relationship.

9. A brake actuator according to Claim 8 characterised in that said pipe end portion is urged against the clamp member by spring means (17).

10. A brake actuator according to Claim 8 or Claim 9 characterised in that said pipe end portion is urged against the clamp member by internal cylinder pressure.

11. A brake actuator according to Claim 7, characterised in that part of the free end portion of the pipe end portion (8) engages the end surface of an insert (9) in order to provide said sealed relationship, the insert being urged away from said surface (14A) by a spring (17) such that, upon release of the clamp member (7) the pipe (6) is urged by the spring away from the surface (14A), permitting fluid flow from the cylinder to the bleed port (15) through recesses (12'') formed in the insert (9).

12. A brake actuator according to Claim 7 characterised in that insert (9) is captive within the enlarged pipe end portion (8) and moves against an opposed surface of the portion (8), upon release of the clamp member (7) in order to provide said sealed relationship.

13. A brake actuator according to Claim 7 characterised in that said enlarged pipe end portion is formed by securing a surrounding olive (40) to the pipe (6).

0291285

FIG 1

FIG 2

FIG 3

FIG 4

0291285

FIG 5

FIG 6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A- 834 721 (GIRLING)<br>* Page 1, line 82 - page 2, line 30; figures 1,3 *<br>--- | 1,6,7 | B 60 T 11/30 |
| A,D | US-A-4 318 460 (KOSINKI)<br>--- | | |
| A | US-A-4 479 511 (HOLLAND)<br>----- | | |
| | | | TECHNICAL FIELDS SEARCHED (Int. Cl.4) |
| | | | B 60 T 11/00 |
| | The present search report has been drawn up for all claims | | |

| Place of search | Date of completion of the search | Examiner |
|---|---|---|
| THE HAGUE | 16-08-1988 | HARTEVELD C.D.H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................................
& : member of the same patent family, corresponding document

EPO FORM 1503 03.82 (P0401)